Europäisches Patentamt

European Patent Office

Office européen des brevets

(19)

(11) Veröffentlichungsnummer: **0 042 118**
**B1**

(12)    . **EUROPÄISCHE PATENTSCHRIFT**

(45) Veröffentlichungstag der Patentschrift: **03.04.85**

(21) Anmeldenummer: **81104329.8**

(22) Anmeldetag: **04.06.81**

(51) Int. Cl.[4]: **H 02 K 15/10, H 01 F 41/12**

(54) **Verfahren zum Umbandeln dreidimensional gekrümmter Leiter.**

(30) Priorität: **13.06.80 DE 3022303**

(43) Veröffentlichungstag der Anmeldung:
**23.12.81 Patentblatt 81/51**

(45) Bekanntmachung des Hinweises auf die
Patenterteilung:
**03.04.85 Patentblatt 85/14**

(84) Benannte Vertragsstaaten:
**CH IT LI**

(56) Entgegenhaltungen:
**CH-A- 583 472**

(73) Patentinhaber: **Siemens Aktiengesellschaft
Berlin und München Wittelsbacherplatz 2
D-8000 München 2 (DE)**

(72) Erfinder: **Brunner, Karl, Dipl.-Ing.
Am Hochgericht 12
D-8540 Schwabach (DE)**
Erfinder: **Didschies, Günter
An der Lehmgrube 7
D-8500 Nürnberg-Boxdorf (DE)**
Erfinder: **Barking, Hans, Dr.
Rotbachstrasse 41
D-4220 Dinslaken (DE)**

Courier Press, Leamington Spa, England.

## Beschreibung

Die Erfindung bezieht sich auf ein Verfahren zum Umbandeln dreidimensional gekrümmter Leiter bei Hochspannungsmotoren, Hochspannungsgeneratoren, Transformatorenleitungen und dergleichen mit Band aus Isoliermaterial, bei dem mittels einer Umbandelvorrichtung ein mit einer oder mehreren schwenkbaren Vorratsrollen für das Isolierband versehener Wickelring entlang des gekrümmten Leiters geführt wird, wobei der Wickelring sechs Freiheitsgrade besitzt.

Zum Isolieren dreidimensional gekrümmter Leiter werden in der Hochspannungstechnik Umbandel-Anlagen verwendet. Diese Anlagen besitzen einen Wickelring mit einer oder mehreren schwenkbaren Vorratsrollen für Isoliermaterialien, wie beispielsweise Zellulosepapier oder Glimmerbänder.

'Zur Führung des Wickelringes entlang des gekrümmten Leiters wird der Leiter selbst benutzt. Es werden Schablonen verwendet oder die elektrisch gespeicherte Raumkurve wird mit einer elektrischen Steuerung automatisch abgefahren. Dabei soll der Leiter immer im Zentrum des Wickelringes gehalten werden und keine seiner Bauelemente darf den Leiter berühren. Dies bedeutet, daß der sich drehende Wickelring sechs Freiheitsgrade besitzt. Er ist in drei Achsen translatorisch bewegbar und um dieselben Achsen drehbar.

Aus der CH—A—583 472 ist eine Umbandelmaschine zum Bewickeln von Leitern für elektrische Maschinen, insbesondere von Stäben, mit Isolierstoffbändern mit einem auf einem Wagen angeordneten Umbandelkopf bekannt, bei dem der Umbandelkopf auf einem im Wagen angeordneten Schlitten gelagert ist, wobei der Schlitten um eine einstellbare Strecke verschiebbar ist. Mit dieser Vorrichtung ist das Umbandeln von in einer Ebene liegenden Leitern mit in der Ebene verlaufenden Krümmungen möglich. Dadurch soll die Qualität der Isolierung im Bereich der Krümmung verbessert werden.

Trotz der bekannten Umbandelsysteme gelingt es in dreidimensional gekrümmten Abschnitten eines Leiters bisher nicht, das Isolierband durchgehend eng anliegend zu wickeln; es neigt hingegen zur sogenannten Taschenbildung, wodurch die elektrische Isolationsfestigkeit und die mechanische Festigkeit der Gesamtisolation wesentlich verringert wird.

Der Erfindung liegt die Aufgabe zugrunde, die bekannten Umbandelverfahren für gekrümmte Leiter dahingehend zu verbessern, daß die unerwünschte Taschenbildung des Isolierbandes in der Krümmung des Leiters nicht mehr auftritt.

Gemäß der Erfindung wird diese Aufgabe dadurch gelöst, daß die Drehachse des Wickelringes jeweils derart gelegt wird, daß sie in dem Bereich, in dem das Isolierband tangential auf den Leiter aufläuft, an der Mittelachse des Leiters eine Tangente bildet.

Um den Wickelring in zwei Bandagierrichtungen verwenden zu können, ist es vorteilhaft, daß der Wickelring auch translatorisch verschoben wird derart, daß er um den jeweiligen tangentialen Berührungspunkt von Drehachse und Mittelachse des Leiters schwenkbar ist.

Anhand der Ziechnung wird die Erfindung noch näher erläutert. Es zeigen:

FIG 1 in schematischer Darstellung das Umbandeln eines gekrümmten Leiters gemäß dem Stand der Technik (Taschenbildung),

FIG 2 in schematischer Darstellung das Umbandeln eines gekrümmten Leiters nach dem Verfahren gemäß der Erfindung (keine Taschenbildung).

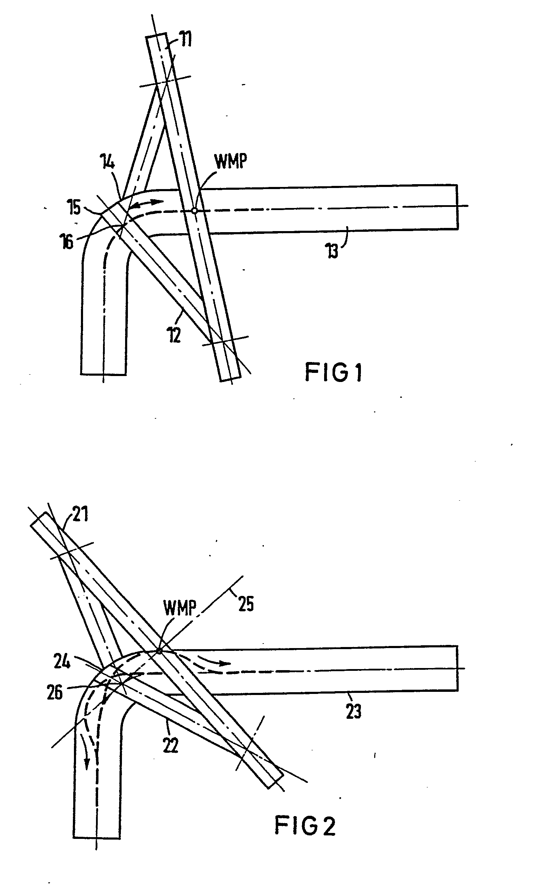

In FIG 1 ist schematisch dargestellt, wie und wodurch beim bisherigen Umbandeln eines gekrümmten Leiters an der Krümmung die unerwünschte Taschenbildung entsteht. Der Wickelring 11 mit dem Isolierband 12 wird um den Leiter 13 gedreht und somit der Leiter 13 mit dem Isolierband 12 umwickelt. In der Krümmung 14 des Leiters 13 entsteht eine unerwünschte Tasche 15, da das Isolierband 12 an dieser Stelle nicht eng anliegend gewickelt werden kann. Durch diese unerwünschte sogenannte Taschenbildung wird die elektrische Isolationsfestigkeit der Isolierung und ihre mechanische Festigkeit wesentlich verringert. Der Grund für diese unerwünschte Taschenbildung liegt an der Lage der Drehachse des Wickelringes 11 bezüglich des Auflaufpunktes des Isolierbandes 12 auf den Leiter 13, der als sogenannter Spinnpunkt 16 des Isolierbandes 12 bezeichnet wird.

Als Spinnpunkt läßt sich also der Ort definieren, an dem Isolierband auf den zu umwickelnden Körper tangential aufläuft. Da ein solcher Körper gemäß Gattungsbegriff allein als dreidimensional gekrümmter Leiter ohne spezielle Querschnittsgeometrie angegeben wird, der im wesentlichen durch seine Mittelachse charakterisierbar ist, soll demzufolge die Definition des Spinnpunktes immer in bezug auf die Leitermittelachse verstanden werden. Betrachtet man der Bereich, in dem Isolierband tangential auf den zu umwickelnden Körper aufläuft, so ergibt sich auch im Falle zweier gleichzeitig aufzuwickelnder Bänder ein einziger Spinnpunkt.

In FIG 2 ist schematisch dargestellt, wie mit dem Verfahren gemäß der Erfindung die Taschenbildung beim Umwickeln gekrümmter Leiter vermieden wird. Der Wickelring 21 wird mit dem Isolierband 22 um den gekrümmten Leiter 23 in einer solchen Art gedreht, daß die Drehachse 25 des Wickelringes 21 jeweils im sogenannten Spinnpunkt 26 des Isolierbandes 22 liegt. Durch diese erfindungsgemäße Maßnahme wird eine Taschenbildung des Isolierbandes 22 in der Krümmung 24 des Leiters wirksam vermieden.

Während also in FIG 1 der Wickelringmittelpunkt WMP immer auf der Mittelachse des Leiters liegt, ist aus FIG 2 ersichtlich, daß bei der Erfindung der Wickelringmittelpunkt WMP eine Bahnkurve ausführen muß, die von der Leitermittelachse abweicht. Diese Bahnkurve ist insbesondere von der Wickelrichtung und damit der Bewegungsrichtung des Wickelringes abhängig.

Bei Umkehrung der Wickelrichtung wird also im Krümmungsbereich die Bahnkurve eine andere Spur bilden, was in FIG 2 angedeutet ist.

**Patentansprüche**

1. Verfahren zum Umbandeln dreidimensional gekrümmter Leiter (13, 23) bei Hochspannungsmotoren, Hochspannungsgeneratoren, Transformatorenleitungen oder dergleichen mit Band (11, 22) aus Isoliermaterial, bei dem mittels einer Umbandelvorrichtung ein mit einer oder mehreren schwenkbaren Vorratsrollen für das Isolierband versehener Wickelring (11, 21) entlang des gekrümmten Leiters (13, 23) geführt wird, wobei der Wickelring sechs Freiheitsgrade besitzt, dadurch gekennzeichnet, daß die Drehachse (25) des Wickelringes (21) jeweils derart gelegt wird, daß sie in dem Bereich, in dem das Isolierband (22) tangential auf den Leiter (23) aufläuft, an der Mittelachse des Leiters (23) eine Tangente bildet.

2. Verfahren nach Anspruch 1, dadurch gekennzeichnet, daß der Wickelring (2) translatorisch verschoben wird derart, daß er um den jeweiligen tangentialen Berührungspunkt von Drehachse (25) und Mittelachse des Leiters (23) schwenkbar ist.

**Revendications**

1. Procédé pour enrubanner des conducteurs (13, 23) cintrés de façon tridimensionnelle dans des moteurs à haute tension, des génératrices haute tension, des conducteurs de transformateurs ou analogues, à l'aide d'une bande (12, 22) constituée en un matériau isolant, et selon lequel un anneau de bobinage (11, 21) qui est muni d'un ou de plusieurs rouleaux débiteurs basculants délivrant la bande isolante, est guidé au moyen d'une enrubanneuse le long de conducteur cintré (13, 23), l'anneau de bobinage possédant six degrés de liberté, caractérisé par le fait qu'on dispose l'axe de rotation (25) de l'anneau de bobinage (21) de telle sorte qu'il forme une tangente au niveau de l'axe médian du conducteur (23) dans la zone où la bande isolante s'applique tangentiellement sur le conducteur (23).

2. Procédé selon la revendication 1, caractérisé par le fait que l'anneau de bobinage (2) est déplacé en translation de telle sorte qu'il peut être basculé autour du point de contact tangentiel entre l'axe de rotation (25) et l'axe médian du conducteur (23).

**Claims**

1. A method of wrapping a conductor (13, 23), which is curved in three dimensions, in high-voltage motors, high-voltage generators, transformer lines, or the like, with tape (11, 22) made of an insulating material, in which, by means of a wrapping device, a winding ring (11, 21) provided with one or more pivotable supply reels for the insulating tape, is guided along the curved conductor (13, 23), the winding ring having six degrees of freedom, characterised in that the axis of rotation (25) of the winding ring (21) is so positioned that it forms a tangent at the central axis of the conductor (23), in the region in which the insulating tape (22) abuts tangentially against the conductor (23).

2. A method as claimed in Claim 1, characterised in that the winding ring (2) is translationally displaced in such a way that it can be pivoted about the respective tangential contact point of the axis of rotation (25) and the central axis of the conductor (23).

**FIG 1**

**FIG 2**